# EUROPÄISCHE PATENTSCHRIFT

(11) **EP 0 494 366 B1**
(45) Veröffentlichungstag und Bekanntmachung des Hinweises auf die Patenterteilung: **12.10.1994**
(21) Anmeldenummer: 91119950.3
(22) Anmeldetag: 22.11.1991
(51) Int. Cl.: B60J 7/043, B60J 7/20

(54) **Fahrzeugdach**
Vehicule roof
Toit de véhicule

(30) Priorität: 07.01.1991 DE 4100240
(43) Veröffentlichungstag der Anmeldung: 15.07.1992
(73) Patentinhaber: MERCEDES-BENZ AG, 70327 Stuttgart (DE)
(72) Erfinder: Klein, Berthold, W-7255 Rutesheim (DE); Reichel, Anton, W-7257 Ditzingen (DE); Tomforde, Johann, W-7032 Sindelfingen (DE); Sacco, Bruno, W-7032 Sindelfingen (DE)

(56) Entgegenhaltungen:
- EP-A- 0 261 379
- DE-A- 3 616 017
- US-A- 4 729 592

## Beschreibung

Die Erfindung bezieht sich auf ein Fahrzeugdach mit einer formsteifen Dachschale der im Oberbegriff des Hauptanspruches angegebenen Art.

Ein derartiges Fahrzeugdach ist der DE-A-36 16 017 bereits als bekannt zu entnehmen, wobei ein vorderer Teil des Daches als in Fahrzeuglängsrichtung verschiebbare Tafel ausgebildet ist. Dieser Dachteil läßt sich zum Öffnen des Daches auf den dahinterliegenden Dachteil schieben, wonach der Dachteil eine geneigte Heckscheibe des darunterliegenden Dachteils überdeckt. Damit trotzdem vom Innenraum des Fahrzeugs aus eine weitgehend ungehinderte Sicht nach hinten möglich bleibt, ist in den vorderen Teil des Daches ein großformatiges Glasdach integriert.
In dieser Offenstellung des Fahrzeugs wird durch die Dachteile im Fahrbetrieb der Innenraum des Fahrzeugs gegen von hinten einströmende Luft abgeschirmt. Zudem umfaßt der hintere Dachteil einen Überrollbügel, wodurch eine hinreichende Überschlagfestigkeit des Fahrzeugs gewährleistet ist.
Als nachteilig ist bei dem bekannten Fahrzeugdach der Umstand anzusehen, daß dessen vorderer Dachteil, der zum Öffnen des Daches bereits in seiner Gesamtheit nach hinten verschiebbar ist, zusätzlich noch mit einem Glasdach oder dgl. versehen sein muß, was einen nicht unerheblichen Mehraufwand bedeutet. Auch müssen bei mit geschlossenem Dach abgestelltem Fahrzeug die von Glasdächern her bekannten Nachteile, wie z. B. eine stärkere Aufheizung des Fahrzeuginnenraumes infolge direkter Sonneneinstrahlung, in Kauf genommen werden.

Der Erfindung liegt die Aufgabe zugrunde, ein Fahrzeugdach der gattungsgemäßen Art dahingehend weiterzuentwickeln, daß der vordere Endbereich des Fahrzeugdaches trotz einer insgesamt undurchsichtigen Gestaltung desselben bei geöffnetem Dach eine die Sicht nach hinten verbessernde Durchsichtöffnung aufweisen kann.

Die erfindungsgemäße Lösung dieser Aufgabe ergibt sich aus den kennzeichnenden Merkmalen des Hauptanspruches.
Aus den übrigen Ansprüchen gehen vorteilhafte Ausgestaltungen der Erfindung hervor.

Vorzugsweise hat die Ausbuchtung die Form eines Kreisabschnitts, wodurch die komplementäre Verbreiterung des Rahmenprofils keine Ecken aufweist, die aufgrund der Anordnung der Verbreiterung oberhalb der vorderen Sitzplätze das Risiko von Kopfverletzungen für die Fahrzeuginsassen erhöhen würden.

Eine weitere Verbesserung der Sicht vom Fahrerplatz nach hinten wird erreicht, wenn die Stirnfläche der Dachschale über ihre gesamte Länge, also der Dachbreite entsprechend, gesehen wellenförmig gebogen ist. Die Wellenkrümmung ist dabei zur Zugluftabschirmung so gewählt, daß hinter jedem der beiden nebeneinander angeordneten Sitzplätze ein Wellenkamm der Krümmung liegt, wenn das Dach geöffnet ist. Diese Ausführungsform hat zudem den Vorteil, daß zur Abdichtung der Stirnfläche der Dachschale gegenüber der Gegenfläche am Rahmenprofil ein durchgehendes Dichtprofil vorgesehen sein kann. Hierdurch kann eine besonders kostengünstige und dabei dauerhaft zuverlässige Dichtanordnung gewährleistet werden.

Bei einteiliger Gestaltung des Fahrzeugdaches in Verbindung mit einer hohen Knicksteifigkeit desselben in Dachschalenlängsrichtung kann der aus dem Aufnahmeraum nach oben überstehende Längenbereich des Fahrzeugdaches gleichzeitig die Funktion eines Überrollbügels erfüllen.

Das Fahrzeugdach bleibt dabei trotz seiner einteiligen Bauweise einfach zu handhaben, wenn die Dachschale über eine Lenkeranordnung an der Karosserie des Fahrzeugs angeschlagen ist, zudem ist die steil aufgerichtete Stellung des Fahrzeugdaches durch einen mechanischen Zwanglauf besonders exakt reproduzierbar.

Zur lösbaren Verbindung der Dachschale mit dem Rahmenprofil sind, wie bei Hardtops üblich, zwei Verschlüsse vorgesehen, die jeweils seitlich des Mittelbereichs angeordnet sind.
Unter Ausnutzung des Verlaufs der Anschlußkontur zwischen Rahmenprofil und Dachschale läßt sich auf der Unterseite des verbreiterten Mittelbereichs vom Rahmenprofil vorteilhaft ein zentrales Betätigungselement anordnen, durch das beide Verschlüsse synchron ver- bzw. entriegelbar sind.

Eine mechanisch besonders einfache Bewegungsübertragung zwischen Verschlußmitteln und Betätigungselement ist dabei über einen Treibstangenantrieb möglich.

Vorzugsweise besteht das Betätigungselement aus einem Drehknebel mit quer zur Dachebene verlaufender Drehachse, da ein solcher problemlos im Rahmenprofil versenkt angeordnet werden kann.

Im folgenden ist ein Ausführungsbeispiel der Erfindung anhand einer zeichnerischen Darstellung näher erläutert.

Dabei zeigen:
- Fig. 1: eine schematische Seitenansicht eines Cabriolets mit versenkbarem Hartdach im geschlossenen Zustand,
- Fig. 2: eine perspektivische Ansicht des Cabriolets schräg von hinten nach Abschluß einer ersten Öffnungsbewegungsphase des Hartdaches,
- Fig. 3: eine Seitenansicht des Cabriolets in einer zweiten Öffnungsbewegungsphase des Hartdaches,
- Fig. 4: eine weitere Seitenansicht des Cabriolets bei vollständig geöffnetem Hartdach,
- Fig. 5: eine Draufsicht auf das Cabriolet bei vollständig geschlossenem Dach,
- Fig. 6: eine rückwärtige Ansicht des Cabriolets bei vollständig geöffnetem Dach, und
- Fig. 7: eine Ansicht des geschlossenen Hartdaches von unten.

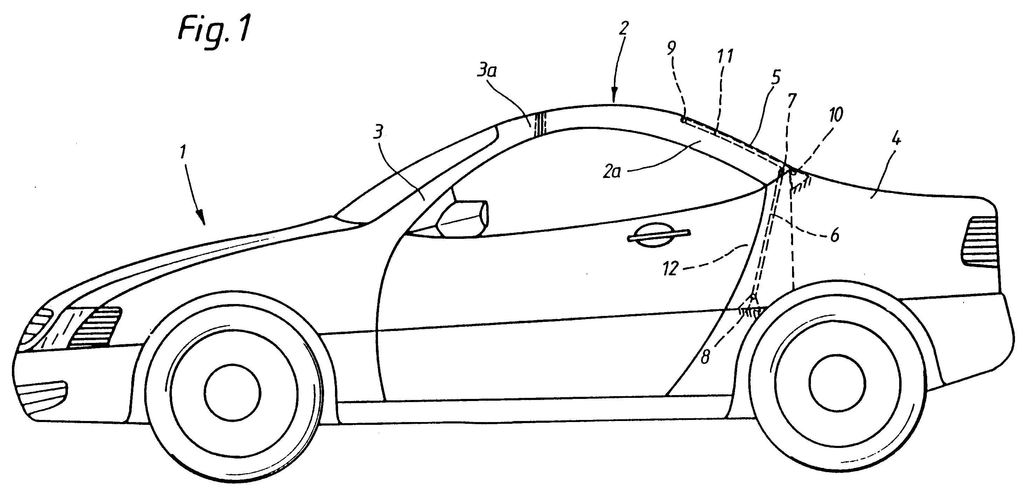

Ein in Fig. 1 dargestelltes Cabriolet 1 weist ein insgesamt starres Hartdach auf, das in an sich bekannter Weise als einteilige Dachschale 2 ausgebildet ist und aus hochfestem Aluminium besteht. Durch die Dachschale 2 ist der Innenraum des Cabriolets 1 im Anschluß an einen die Windschutzscheibe haltenden Frontscheibenrahmen 3 bis zu einem hinteren Kofferraumteil 4 der Karosserie nach oben abgedeckt. An der Abdeckfunktion ist im hinteren Längenbereich der Dachschale 2 eine rechteckige Heckscheibe 5 beteiligt, die beidseitig von einem zur Dachschale 2 gehörenden Dachpfosten 2a eingefaßt ist. Von der Seite aus gesehen schließen die Dachpfosten 2a mit dem davorliegenden Längenbereich der Dachschale 2 einen stumpfen Winkel von etwa 160° ein, wobei die Dachpfosten 2a unter einer bogenförmigen Krümmung in den davorliegenden Längenbereich der Dachschale 2 übergehen. Vorn ist die Dachschale 2 lösbar mit einem oberen Rahmenprofil 3a des Frontscheibenrahmens 3 verbunden, wie an späterer Stelle noch näher erläutert werden wird. Die Stoßfuge zwischen der nach vorn gewandten Stirnfläche der Dachschale 2 und der gegenüberliegenden Gegenfläche des Rahmenprofils 3a verläuft dabei über die gesamte Fugenlänge nahezu senkrecht. Das hintere Ende der Dachschale 2 ist über eine Lenkeranordnung mit der Karosserie des Cabriolets 1 verbunden. Diese Lenkeranordnung umfaßt zwei bezogen auf die Längsmittelebene des Cabriolets 1 spiegelsymmetrisch angeordnete Stützlenker 6, die mit ihrem oberen Ende am unteren Ende des zugeordneten Dachpfostens 2a und mit ihrem unteren Ende an der Karosserie des Cabriolets 1 angelenkt sind. Zur Anlenkung dienen dabei jeweils Scharniergelenke 7 und 8 mit jeweils rechtwinklig zur Längsmittelebene verlaufender Scharnierachse, wodurch die Stützlenker 6 in einer zur Längsmittelebene des Cabriolets 1 parallelen Ebene um ihr Scharniergelenk 8 schwenkbar sind, wobei die Schwingebene seitlich neben dem unteren Ende des zugeordneten Dachpfostens 2a liegt. Die geraden Stützlenker 6 sind etwa rechtwinklig zur Längserstreckung der Dachpfosten 2a geneigt, wodurch sie fast senkrecht stehen und somit primär auf Knickung beansprucht werden.
Wegen dieser Beanspruchung sind die Stützlenker 6 vorzugsweise rohrförmig ausgebildet, wodurch sie bei geringem Gewicht besonders knicksteif sind.

Des weiteren umfaßt die Lenkeranordnung im vorliegenden Fall die Heckscheibe 5 als großformatigen Führungslenker. Hierzu ist sie oberhalb ihrer oberen Randseite über zwei Scharniergelenke 9 an der Dachschale 2 und unterhalb ihrer unteren Randseite über zwei Scharniergelenke 10 am Kofferraumteil 4 angeschlagen, wobei alle geometrische Scharnierachsen der Scharniergelenke 9 und 10 zueinander und zu denen der Scharniergelenke 7 und 8 parallel verlaufen. Die beiden Scharniergelenke 10 liegen im wesentlichen auf gleicher Höhe wie die Scharniergelenke 7 und weisen in Fahrzeuglängsrichtung gesehen nur einen geringen Abstand zu diesen auf. Dadurch ergeben sich günstige Hebelverhältnisse für einen Schließvorgang des Daches, bei dem die rahmenlose Heckscheibe 5 gegen die Kraft einer Dichtung auf ihren Dichtsitz 11 an der Dachschale 2 niedergedrückt werden muß. Aufgrund der Anlenkung des unteren Randes der Heckscheibe 5 am Kofferraumteil 4 ergibt sich, daß die Heckscheibe 5 entlang ihrer unteren Randseite auch den unteren Abschluß des Daches bilden muß. Daher ist der Dichtsitz 11 nur entlang den seitlichen Scheibenrändern und dem oberen Scheibenrand an der Dachschale 2 angeordnet, während er entlang dem unteren Scheibenrand von einem Karosserieflansch des Kofferraumteils 4 gebildet wird. Ferner stimmt die durch den Abstand der Scharniergelenke 9 und 10 vorgegebene Schwenklänge der als Führungslenker fungierenden Heckscheibe 5 im wesentlichen mit der Schwenklänge der beiden Stützlenker 6 überein.

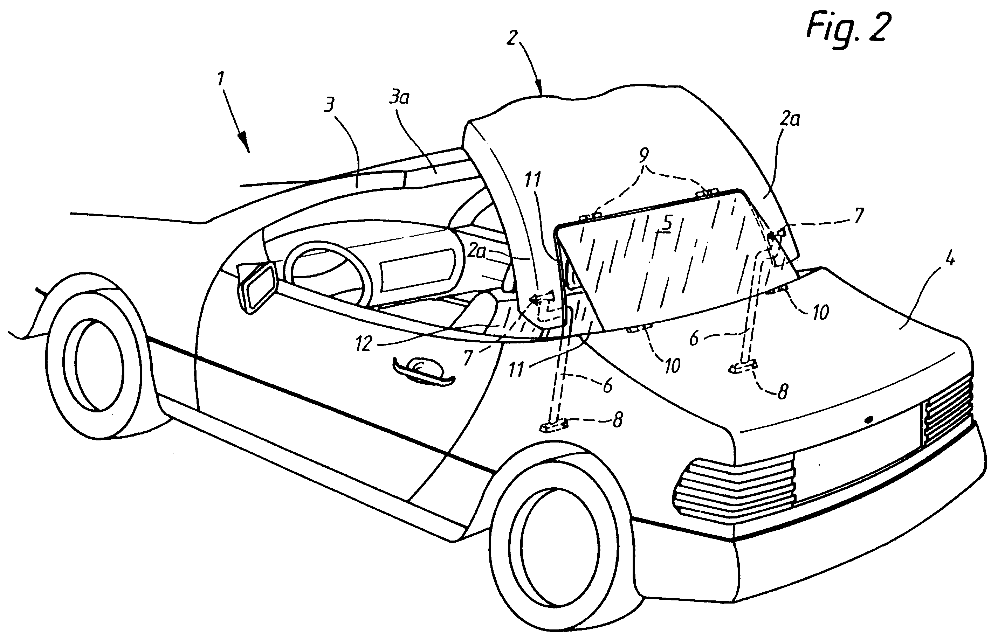

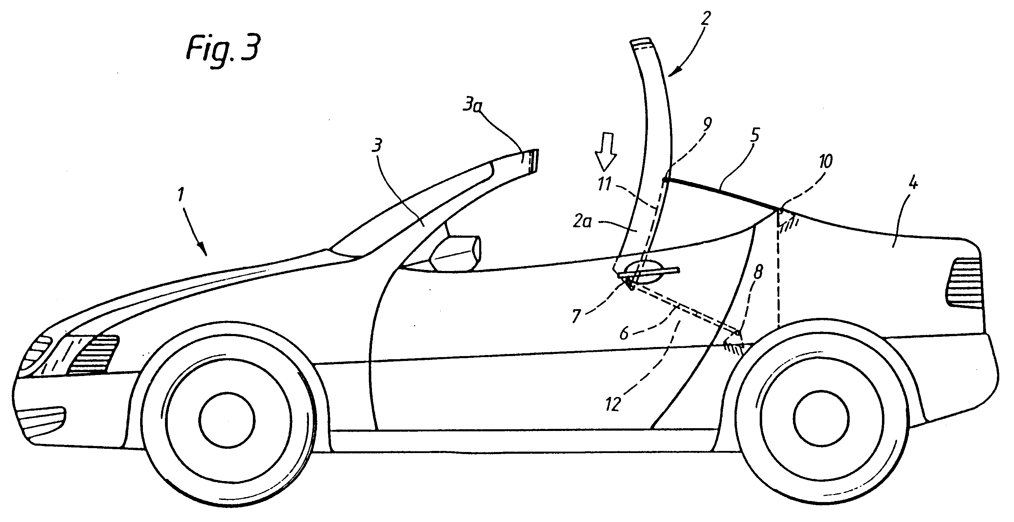

Aufgrund der vorbeschriebenen Lenkeranordnung läßt sich die Dachschale 2 nach dem Lösen der Verbindung zum Rahmenprofil 3a unter zwangsläufiger Bewegungssteuerung in einen Aufnahmeraum 12 absenken, der im Innenraum des Cabriolets 1 von den Rückenlehnen der Vordersitze und einer Stirnwand des Kofferraumteils 4 begrenzt wird. Hierzu wird die Dachschale 2 am vorderen Ende angehoben, bis sie eine in Fig. 2 sichtbare, steil aufgerichtete Zwischenstellung erreicht hat. Bei diesem Vorgang schwingen die Stützlenker 6 um die Scharniergelenke 8 bis in eine senkrechte Stellung der Stützlenker 6 nach vorn, wodurch die Scharniergelenke 7 hochbewegt werden und damit auch die über diese angelenkte Dachschale 2 entsprechend angehoben wird. Gleichzeitig vergrößert sich der Abstand der Scharniergelenke 7 von den Scharniergelenken 10, da die Dachpfosten 2a um die Scharniergelenke 9 ebenfalls in eine senkreche Position nach vorn schwingen. Bei dieser Bewegung der Dachpfosten 2a relativ zur Heckscheibe 5 wird letztere gleichzeitig von ihrem Dichtsitz 11 abgehoben. Da die Scharniergelenke 7, 8 und 9 in einer senkrechten Strecklage übereinanderliegen, ist diese Zwischenstellung relativ stabil, kann jedoch durch nach hinten gerichteten Druck bzw. Zug am oberen Ende der Dachschale 2 oder durch nach vorn gerichteten Druck bzw. Zug an einem der Dachpfosten 2a problemlos überdrückt werden, wonach sich die Dachschale 2 abwärts bewegt und in den Aufnahmeraum 12 abgesenkt wird. Infolge der Lenkergeometrie wird die Dachschale 2, wie in Fig. 3 sichtbar ist, zu Beginn des Eintauchvorgangs in den unterhalb der Dachpfosten 2a liegenden Aufnahmeraum 12 hineingeschoben. Dieser der Länge der Dachschale 2 nach erfolgende Absenkvorgang erfolgt durch eine Parallelverschiebung derselben, da die Stützlenker 6 und die Heckscheibe 5 parallelogrammartig mit den Dachpfosten 2a zusammenwirken.

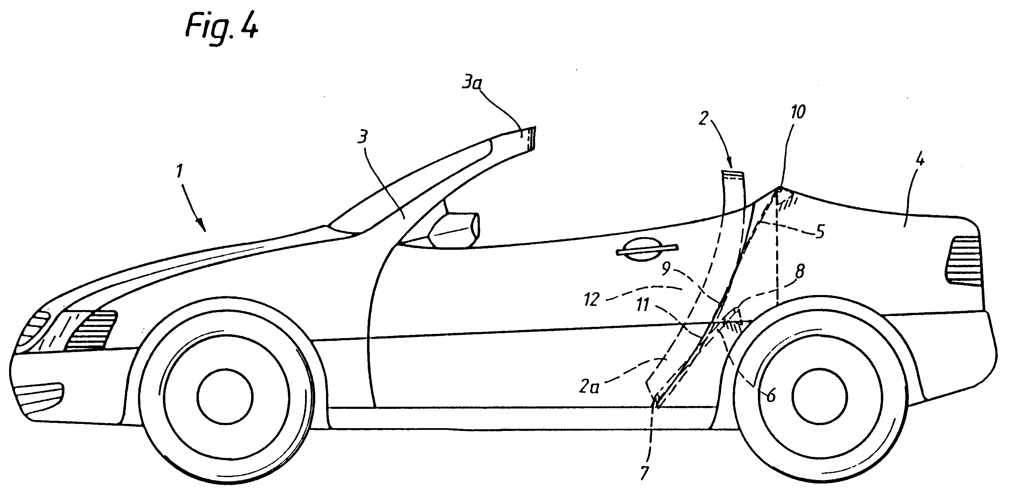

Fig. 4 zeigt die Dachschale 2 in ihrer unteren Endlage, in der sie bis auf ihren vorderen Endbereich im Aufnahmeraum 12 versenkt ist. Da sie in der letzten Absenkbewegungsphase nach hinten parallelverschoben wurde, liegt sie dabei unmittelbar vor einer schrägen Querebene des Aufnahmeraums 12, in der die von ihrer Betriebsstellung um etwa 90° nach unten geschwenkte Heckscheibe 5 abgelegt ist. Die Dachpfosten 2a liegen unterhalb der Heckscheibe 5 nahezu in derselben Querebene, wodurch die Stützlenker 6 nahezu parallel zu den Dachpfosten 2a verlaufen. Über die somit als Zugstreben wirkenden Stützlenker 6 ist eine sehr stabile Längsabstützung der Dachschale 2 an der Karosserie gegeben. Die Länge der Dachschale 2 ist so bemessen, daß ihr vorderer, aus dem Aufnahmeraum 12 hinausragender Endbereich als Überrollbügel wirksam werden kann. Der Überstand entspricht hierzu etwa dem Überstand der mit jeweils einer Kopfstütze versehenen Sitzlehnen des Fahrer- bzw. Beifahrersitzes 13.

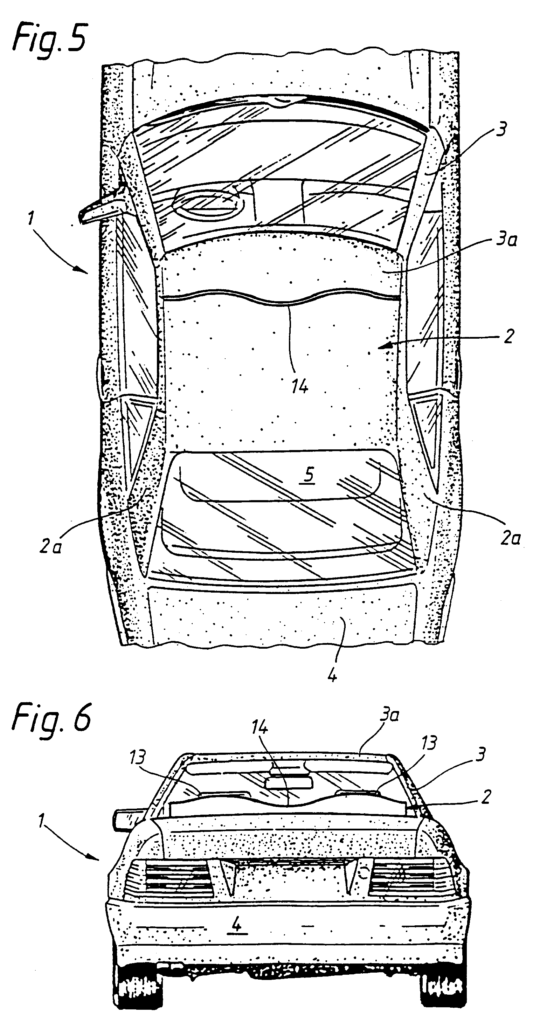

Um zu erreichen, daß auch bei geöffnetem Dach von den Fahrzeugsitzen 13 aus eine ausreichende Sicht nach hinten gegeben ist und trotzdem eine Zugluftabschirmung der Sitzplätze durch den nach oben überstehenden Längenbereich der Dachschale 2 erhalten bleibt, verlaufen die vordere Stirnflächen der Dachschale 2 sowie die gegenüberliegende Anschlußfläche des Rahmenprofiles 3a in Breitenrichtung des Daches gesehen nicht gerade sondern unter einer Bogenkontur.
Diese bezogen auf die Längsmittelebene des Cabriolets 1 spiegelsymmetrische Bogenkontur umfaßt, wie in Fig. 5 bzw. Fig. 6 sichtbar ist, im mittleren Drittel der Dachbreite eine nach hinten gerichtete Ausbuchtung 14 der Dachschale 2, die von der Stirnfläche der Dachschale 2 ausgeht, welche über die angrenzende Länge kreisbogenförmig gekrümmt ist. Damit die Anschlußfläche des Rahmenprofils 3a hierzu komplementär verlaufen kann, ist es durch eine im Mittelbereich angeordnete, nach hinten gerichtete Ausbauchung entsprechend verbreitert.
Die vordere Stirnfläche der Dachschale 2 ist hier über ihre gesamte Länge gesehen wellenförmig gebogen, wobei die Ausbuchtung 14 von einem Wellental sowie den beiden Flanken der sich beidseitig an das Wellental anschließenden Wellenkämme eingefaßt ist. Die beiden Wellenkämme liegen hierbei jeweils mittig zum ihnen zugeordneten Fahrzeugsitz 13 und gehen danach in ein flacheres Wellental über, in dessen Talmitte die Stirnfläche der Dachschale 2 jeweils an einer der beiden vorderen Ecken derselben endet. Der geringeren Ausbuchtung der Dachschale 2 in den beiden Endbereichen der Stirnfläche entsprechend ist auch das Rahmenprofil 3a in seinen Endbereichen geringer verbreitert als im Mittelbereich.

Da die Dachschale 2 bei geöffnetem Dach steil aufgerichtet ist, ermöglicht die Ausbuchtung 14 trotz an sich geringer Erstreckung in Dachschalenlängsrichtung eine ausreichende Durchsicht nach hinten. Durch die beiden seitennahen Ausbuchtungen am vorderen Ende der Dachschale 2 ist ferner die Sicht zu den hinteren Ecken des Cabriolets 1 verbessert, wodurch die Übersicht beim Einparken des Cabriolets 1 zusätzlich deutlich verbessert ist.

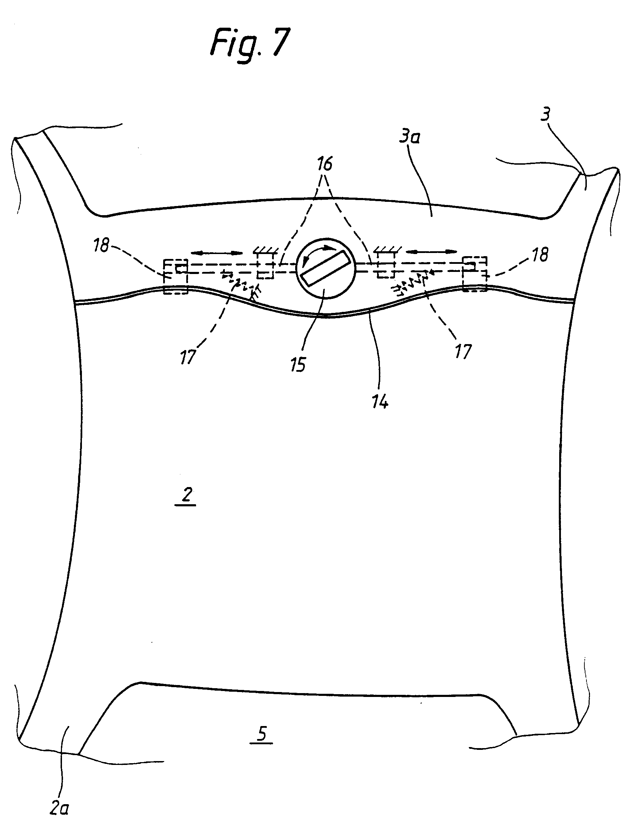

Aufgrund der Verbreiterung des Rahmenprofils 3a steht im Mittelbereich des Rahmenprofils 3a eine größerformatige Fläche zur Verfügung, die zur Anordnung eines Betätigungselementes zum Ver- und Entriegeln der Dachschale 2 mit dem Rahmenprofil 3a genutzt werden kann, womit sich eine griffgünstige Anordnung für eine manuelle Betätigung ergibt. Die in Fig. 7 schematisch dargestellte Anordnung umfaßt als Betätigungselement einen Drehknebel 15, der in die Unterseite des Rahmenprofils 3a eingelassen ist, und der richtungsumkehrbar um eine im wesentlichen senkrechte Achse drehbar gelagert ist. Mit dem Drehknebel 15 wird eine nicht dargestellte, koaxiale Kurvenscheibe gedreht, deren Drehbewegung in einen axialen Vorschub von zwei Treibstangen 16 umgewandelt wird, die im Innern des Rahmenprofils 3a längsverschiebbar gelagert sind und sich jeweils mit einem Ende auf dem Umfang der Kurvenscheibe abstützen. Die diametrisch zur Kurvenscheibe angeordneten Treibstangen 16 verlaufen parallel zur Mittellängsachse des Rahmenprofils 3a und sind in Richtung auf die Kurvenscheibe über jeweils eine Rückstellfeder 17 axial federbelastet. Das von der Kurvenscheibe abgewandte Ende der Treibstangen 16 greift bei geschlossenem Dach paßgenau in eine Querbohrung einer zugeordneten Verschlußöse 18 ein. Die beiden mit den Treibstangen 16 zusammenwirkenden Verschlußösen 18 ragen beidseitig der Ausbuchtung 14 von der Stirnfläche der Dachschale 2 nach vorn ab und durchsetzen eine gegenüberliegende Durchgangsöffnung im Rahmenprofil 3a, wodurch ihre am freien Ende angeordneten Querbohrungen in eine weitgehend koaxiale Lage zu den Treibstangen 16 gelangen, wenn das Dach geschlossen wird. Damit die Vorspannkraft einer zwischen der Dachschale 2 und dem Rahmenprofil 3a abgestutzten Dichtung beim Verriegelungsvorgang überwunden werden kann, sind die mit den Verschlußösen 18 zusammenwirkenden Endbereiche der Treibstangen 16 zweckmäßig kegel- oder keilförmig gestaltet.

## Patentansprüche

1. Versenkbares Fahrzeugdach mit einer formsteifen Dachschale (2) in einem vorderen Endbereich des Daches, die sich über die gesamte Dachbreite erstreckt und bei geschlossenem Dach lösbar mit einem ihrer vorderen Stirnfläche gegenüberliegenden Rahmenprofil (3a) eines Frontscheibenrahmens (3) verbunden ist, und die bei geöffnetem Dach in einer hinter einem Sitzbereich liegenden Querebene des Fahrzeugs gehalten ist, wobei die um eine horizontale Fahrzeugquerachse geschwenkte Dachschale (2) bezogen auf die Gürtellinie des Fahrzeugs nach oben übersteht und im überstehenden Längenbereich eine im wesentlichen mittig zur Fahrzeugbreite gelegene Durchsichtöffnung aufweist,
**dadurch gekennzeichnet,**
daß die vordere Stirnfläche der Dachschale (2) im Mittelbereich des Daches eine sich bei geschlossenem Dach in Fahrzeuglängsrichtung erstreckende Ausbuchtung (14) der Dachschale (2) begrenzt, zu welcher das Rahmenprofil (3a) des Frontscheibenrahmens (3) im Mittelbereich komplementär verbreitert ist, und daß die Dachschale (2) bei geöffnetem Dach steil aufgerichtet ist, wodurch die Ausbuchtung (14) am vorderen Ende der Dachschale (2) als Durchsichtöffnung nutzbar ist.

2. Fahrzeugdach nach Anspruch 1,
**dadurch gekennzeichnet,**
daß die Stirnfläche der Dachschale (2) in ihrem die Ausbuchtung (14) begrenzenden Längenbereich kreisbogenförmig gekrümmt ist.

3. Fahrzeugdach nach Anspruch 2,
**dadurch gekennzeichnet,**
daß die Stirnfläche über ihre gesamte Länge gesehen wellenförmig gebogen ist, wobei die Ausbuchtung (14) von einem Wellental sowie den beiden Flanken der sich daran anschließenden Wellenkämme eingefaßt ist, und wobei die Wellenkämme jeweils etwa mittig eines zugeordneten Sitzplatzes angeordnet sind.

4. Fahrzeugdach nach Anspruch 1,
**dadurch gekennzeichnet,**
daß die formsteife Dachschale (2) das gesamte Dach samt den hinteren Dachpfosten (2a) umfaßt, wobei die Dachschale (2) bei geöffnetem Dach der Länge nach in einem Aufnahmeraum (12) des Fahrzeugs (Cabriolets 1) hineingeschoben ist.

5. Fahrzeugdach nach Anspruch 4,
**dadurch gekennzeichnet,**
daß die Dachschale (2) über eine Lenkeranordnung an der Karosserie des Fahrzeugs (Cabriolets 1) angeschlagen ist, wodurch sie beim Öffnen und Schließen zwangsläufig bewegungsgesteuert ist.

6. Fahrzeugdach nach Anspruch 1,
**dadurch gekennzeichnet,**
daß zur lösbaren Verbindung der Dachschale (2) mit dem Rahmenprofil (3a) des Frontscheibenrahmens (3) beidseitig der Ausbuchtung (14) ein Verschlußmittel (Verschlußöse 18) vorgesehen ist, wobei die Verschlußmittel (Verschlußösen 18) durch ein zentral angeordnetes Betätigungselement (Drehknebel 15) gleichzeitig verriegelbar sind.

7. Fahrzeugdach nach Anspruch 6,
**dadurch gekennzeichnet,**
daß das Betätigungselement (Drehknebel 15) mittig der Dachbreite am Rahmenprofil (3a) des Frontscheibenrahmens (3) angeordnet ist.

8. Fahrzeugdach nach Anspruch 6,
**dadurch gekennzeichnet,**
daß die Verschlußmittel (Verschlußösen 18) über ein Treibstangenpaar (16, 16) mit dem Betätigungselement (Drehknebel 15) wirkverbunden sind.

9. Fahrzeugdach nach Anspruch 8,
**dadurch gekennzeichnet,**
daß als Betätigungselement ein Drehknebel (15) mit quer zur Dachebene verlaufender Drehachse vorgesehen ist.

## Claims

1. Lowerable vehicle roof having a dimensionally stable roof shell (2) in a front end area of the roof, which shell extends over the entire width of the roof and, when the roof is closed, is detachably connected to a frame profile (3a), lying opposite its front end face, of a front windscreen frame (3), and which is held, when the roof is open, in a transverse plane of the vehicle located behind a seat area, the roof shell (2), which is swivelled about a horizontal vehicle transverse axis, protruding upwards in relation to the equator of the vehicle and having in the protruding longitudinal area a viewing opening located essentially in the centre of the vehicle width, characterised in that the front end face of the roof shell (2) delimits, in the central area of the roof, an indentation (14) of the roof shell (2) which extends in the longitudinal direction of the vehicle when the roof is closed, the frame profile (3a) of the front windscreen frame (3) being widened in the central area in a fashion which is complementary to said roof shell, and in that the roof shell (2) is completely upright when the roof is open, as a result of which the indentation (14) at the front end of the roof shell (2) can be utilised as a viewing opening.

2. Vehicle roof according to Claim 1, characterised in that the end face of the roof shell (2) is curved in a circular segment shape in its longitudinal area which delimits the indentation (14).

3. Vehicle roof according to Claim 2, characterised in that the end face is curved in a wave shape viewed over its entire length, the indentation (14) being bordered by a wave trough and the two edges of the wave crests adjoining it, and the wave crests being arranged in each case approximately in the centre of an assigned seat.

4. Vehicle roof according to Claim 1, characterised in that the dimensionally stable roof shell (2) comprises the entire roof together with the rear roof pillars (2a), the roof shell (2) being pushed, when the roof is open, lengthwise into a receiving space (12) of the vehicle (convertible 1).

5. Vehicle roof according to Claim 4, characterised in that the roof shell (2) is attached by means of a connecting rod arrangement to the body of the vehicle (convertible 1), by means of which its movement is positively controlled during opening and closing.

6. Vehicle roof according to Claim 1, characterised in that a locking means (lock rings 18) is provided on both sides of the indentation (14) for the purpose of detachable connection of the roof shell (2) to the frame profile (3a) of the front windscreen frame (3), the locking means (lock rings 18) being simultaneously lockable by means of a centrally arranged actuation element (finger-grip knob 15).

7. Vehicle roof according to Claim 6, characterised in that the actuation element (finger-grip knob 15) is arranged in the centre of the width of the roof on the frame profile (3a) of the front windscreen frame (3).

8. Vehicle roof according to Claim 6, characterised in that the locking means (lock rings 18) are operatively connected to the actuation element (finger-grip knob 15) by means of a pair of drive rods (16, 16).

9. Vehicle roof according to Claim 8, characterised in that a finger-grip knob (15) with axis of rotation running transversely to the roof plane is provided as actuation element.

## Revendications

1. Toit de véhicule escamotable ,comportant une coque de toit de forme rigide (2) située dans une partie d'extrémité avant du toit et qui s'étend sur toute la largeur du toit et, lorsque le toit est fermé, est reliée de façon amovible à un profilé (3a), situé en vis-à-vis de la surface frontale avant de la coque, d'un cadre (3) du parebrise, et qui, lorsque le toit est ouvert, est retenue dans un plan transversal du véhicule, qui est situé en arrière d'une partie de siège, et dans lequel la coque de toit (2) basculée autour d'un axe transversal horizontal du véhicule fait saillie vers le haut par rapport à la ligne de ceinture du véhicule et possède, dans la zone longitudinale saillante,une ouverture d'observation située essentiellement au centre dans l'étendue du véhicule en largeur, caractérisé en ce
que la surface frontale avant de la coque de toit (2) limite, dans la partie médiane du toit, une partie concave (14) de la coque de toit (2), qui, lorsque le toit est fermé, s'étend dans la direction longitudinale du véhicule et au niveau de laquelle le profilé (3a) du cadre (3) du pare-brise s'élargit de façon complémentaire dans la zone médiane, et que, lorsque le toit est ouvert, la coque de toit (2) est dressée, ce qui permet d'utiliser la partie concave (14) située sur l'extrémité avant de la coque de toit (2) en tant qu'ouverture d'observation.

2. Toit de véhicule selon la revendication 1, caractérisé en ce que la surface frontale de la plaque de toit (2) est cintrée avec une forme en arc de cercle dans sa partie longitudinale qui limite la partie concave (14).

3. Toit de véhicule selon la revendication 2, caractérisé en ce que la surface frontale est cintrée avec une forme ondulée lorsqu'on regarde sur toute sa longueur, la partie concave (14) étant délimitée par un creux d'ondulation ainsi que par les deux flancs des parties d'ondulation qui s'y raccordent, les parties d'ondulation étant disposées respectivement approximativement au milieu d'une place assise associée.

4. Toit de véhicule selon la revendication 1, caractérisé en ce que la coque de toit de forme rigide (2) inclut l'ensemble du toit y compris les montants de toit arrière (2a), la coque de toit (2) étant insérée, dans le sens de la longueur, dans un espace de logement (12) du véhicule (cabriolet 1) lorsque le toit est ouvert.

5. Toit de véhicule selon la revendication 4, caractérisé en ce que la coque de toit (2) est raccordée par l'intermédiaire d'un dispositif à leviers articulés à la carrosserie du véhicule (cabriolet 1), ce qui a pour effet que lors de l'ouverture et de la fermeture/ ses déplacements sont commandés d'une manière imposée.

6. Toit de véhicule selon la revendication 1, caractérisé en ce que pour la liaison amovible de la coque de toit (2) au profilé (3a) du cadre (3) du pare-brise, un moyen de fermeture (oeillet de fermeture 18) est prévu des deux côtés de la partie concave (14), les moyens de fermeture (oeillets de fermeture 18) pouvant être verrouillés simultanément au moyen d'un élément central d'actionnement (poignée pivotante 15).

7. Toit de véhicule selon la revendication 6, caractérisé en ce que l'élément d'actionnement (poignée pivotante 15) est disposé au milieu de l'étendue du toit en largeur, sur le profilé (3a) du cadre (3) du pare-brise.

8. Toit de véhicule selon la revendication 6, caractérisé en ce que les moyens de fermeture (oeillets de fermeture 18) sont reliés à l'élément d'actionnement (poignée pivotante 15) selon une liaison active par l'intermédiaire d'un couple de barres d'entraînement (16,16).

9. Toit de véhicule selon la revendication 8, caractérisé en ce qu'il est prévu, comme élément d'actionnement, une poignée pivotante (15) possédant un axe de rotation transversal par rapport au plan du toit.
